**Europäisches Patentamt**

**European Patent Office**

**Office européen des brevets**

(19)

(11) Numéro de publication: **0 039 633**
**B1**

(12) **FASCICULE DE BREVET EUROPEEN**

(45) Date de publication du fascicule du brevet: **11.07.84**

(51) Int. Cl.³: **C 08 F 10/02, C 08 F 4/28**

(21) Numéro de dépôt: **81400658.1**

(22) Date de dépôt: **28.04.81**

(54) **Procédé monophasé de polymérisation de l'éthylène en présence d'eau.**

(30) Priorité: **06.05.80 FR 8010031**

(43) Date de publication de la demande:
**11.11.81 Bulletin 81/45**

(45) Mention de la délivrance du brevet:
**11.07.84 Bulletin 84/28**

(84) Etats contractants désignés:
**AT BE CH DE GB IT LI LU NL SE**

(56) Documents cités:
**FR - A - 1 578 947**
**FR - A - 2 339 627**

(73) Titulaire: **Société Chimique des Charbonnages Tour Aurore Place des Reflets Cédex no 5 F-92080 Paris la Défense 2 (FR)**

(72) Inventeur: **Machon, Jean-Pierre**
**83, rue Delisse Engrand**
**F-62400 Béthune (FR)**
Inventeur: **Nicco, Adrien**
**12, rue de l'Egalité**
**F-62400 Béthune (FR)**

(74) Mandataire: **Dubost, Thierry**
**Société Chimique des Charbonnages Service Propriété Industrielle B.P. No 1**
**F-62160 Bully-les-Mines (FR)**

Courier Press, Leamington Spa, England.

## Description

La présente invention concerne un procédé monophasé de polymérisation de l'éthylène en présence d'eau.

On connaît depuis longtemps des procédés de polymérisation de l'éthylène à température et pression élevées au moyen d'initiateurs de radicaux libres. Dans de tels procédés, la réaction se déroule dans une seule phase fluide à l'état supercritique et le taux de conversion de l'éthylène en polyéthylène est généralement de l'ordre de 15 à 20% (en réacteur autoclave) voire 15 à 30% (en réacteur tubulaire), l'éthylène non converti étant séparé du polymère sous une pression intermédiaire entre la pression de réaction et la pression atmosphérique puis recyclé et recomprimé vers le réacteur.

On connaît également des procédés de polymérisation de l'éthylène en présence de quantités importantes d'eau, selon lesquels la réaction se déroule dans un milieu polyphasé du type émulsion, comme illustré par les brevets américains n° 3.629.224 et 3.978.017 et le brevet français n° 2.339.627. Ces procédés opèrent généralement à des températures modérées (60 à 200°C) et le cas échéant en présence d'agents émulsifiants.

La présente invention vise à réaliser un procédé de polymérisation de l'éthylène en présence d'eau selon lequel la réaction se déroule dans une seule phase fluide à l'état supercritique, dans des conditions aussi proches que possible de celles du procédé exposé en premier ci-dessus. Le but de la présente invention consiste à obtenir, grâce à la présence d'eau dans le milieu réactionnel dans des conditions bien définies:

— soit une augmentation notable du taux de conversion de l'éthylène, les propriétés du polymère produit étant maintenues à leur niveau habituel,
— soit une amélioration de certaines propriétés du polymère produit, le taux de conversion de l'éthylène étant maintenu égal.

Dans ces conditions, le procédé selon l'invention consiste à polymériser l'éthylène en présence d'au moins un initiateur de radicaux libres, sous une pression comprise entre 1000 et 3000 bars et à une température comprise entre 180° et 300°C, dans au moins un réacteur comportant au moins une zone réactionnelle, la polymérisation étant effectuée en présence d'eau à une concentration supérieure ou égale à 1% en poids et inférieure ou égale à la concentration saturante d'eau dans l'éthylène à la température de la zone réactionnelle considérée.

Par zone réactionnelle on entend une zone du réacteur dans laquelle l'éthylène se trouve en présence d'un initiateur de radicaux libres, étant entendu que le réacteur peut comporter des zones non réactionnelles, généralement situées en amont des zones réactionnelles, dans lesquelles on réalise la dissolution de l'eau dans l'éthylène.

Par concentration saturante d'eau dans l'éthylène on entend la concentration saturante d'eau dans le milieu comprenant d'une part l'éthylène et d'autre part le polyéthylène formé, étant entendu que le constituant aqueux et les deux constituants organiques forment, dans les conditions spécifiques du procédé selon l'invention, une phase fluide unique.

L'un des aspects importants de la présente invention réside dans la détermination expérimentale de la concentration saturante d'eau dans l'éthylène en fonction de la température et de la pression. On a constaté que, dans le domaine des pressions comprises entre 1000 et 3000 bars, cette concentration ne dépend pas (en première approximation) de la pression et évolue de 4,5% à 36% en poids lorsque la température augmente de 180° à 300°C.

Lorsque le réacteur comprend plusieurs zones réactionnelles opérant à des températures différentes, on peut prévoir d'injecter de l'eau dans chaque zone en respectant les concentrations limites indiquées ci-dessus. Mais on peut aussi se contenter d'injecter de l'eau dans la seule zone réactionnelle opérant à la température la plus élevée.

Le procédé selon l'invention peut être réalisé soit dans un réacteur autoclave soit dans un réacteur tubulaire (comme dans le brevet est-allemand n° 58.387) soit dans un dispositif combinant les deux types de réacteurs, en série ou en parallèle. La réaction de polymérisation peut être effectuée en présence d'agents de transfert de chaîne habituels tels que notamment l'hydrogène utilisé en proportion de 0,2 à 2% en volume. Par contre il est préférable d'éviter la présence, dans le milieu réactionnel, de diluants du type hydrocarbures saturés employés à des concentrations supérieures à 4% en poids.

Les initiateurs de radicaux libres utilisables dans le procédé selon l'invention comprennent:

— d'une part les composés employés habituellement dans les procédés en absence d'eau, tels que l'oxygène, les peroxydes et les peresters, et
— d'autre part des composés solubles dans l'eau tels que l'eau oxygénée, le persulfate d'ammonium et certains hydroperoxydes; parmi ces derniers on peut citer particulièrement les hydroperoxydes d'alkylarylsulfonates alcalin ou alcalino-terreux, tel que l'hydroperoxyde cumène-sulfonate de sodium employé en solution aqueuse de pH compris entre 3 et 13,5.

On pourra, si besoin est, employer un initiateur du premier type dans une zone réactionnelle et un initiateur du second type (soluble dans l'eau) dans une autre zone.

Le procédé selon l'invention ne nécessite pas de modification fondamentale de l'installation de polymérisation, par rapport à un procédé en absence d'eau. Ainsi l'installation de polymérisation comprendra, de manière habituelle, outre le réacteur, un séparateur fonctionnant sous pression intermédiaire (100 à 500 bars) dans lequel on sépare le mélange d'éthylène et de polymère provenant du réacteur, un circuit dans lequel on recycle l'éthylène vers le réacteur par l'intermédiaire d'un hypercompresseur, et un dispositif de dégazage sous pression modérée (inférieure à 15 bars environ) du polymère séparé, le gaz éliminé par ce dispositif étant lui aussi recyclé vers le réacteur par l'intermédiaire d'un compresseur.

L'installation pour la mise en oeuvre du procédé selon l'invention comprendra en outre, de préférence, au moins un dispositif de séchage disposé sur un circuit de recyclage de l'éthylène. Un tel dispositif a pour fonction d'éviter la formation dans l'installation d'hydrates ($C_2H_4$, $nH_2O$) qui cristallisent lorsque la température est abaissée en-dessous d'une valeur fonction de la pression—valeur connue par les travaux de Van Cleef et Diepen, Rec. Trav. Chim. 81, 425—429 (1962)—et risquent donc de boucher les circuits de recyclage. Comme dispositifs de séchage on peut utiliser, dans le cadre de la présente invention, des colonnes d'absorbants tels que alumine, silicagel, zéolithes, etc... Comme alternative à l'emploi de dispositifs de séchage, on pourrait bien évidemment effectuer le recyclage de l'éthylène non converti dans des conditions de température et de pression qui excluent le domaine d'existence des hydrates, mais une telle solution apparaît le plus souvent peu sûre.

Le procédé selon l'invention permet de fabriquer des résines de polyéthylène de masse volumique comprise entre 0,910 et 0,940 g/cm3 et d'indice de fluidité (déterminés selon la norme ASTM 1238—62 T) compris entre 0,1 et 200. Il permet également, en réalisant la réaction de polymérisation en présence d'un monomère copolymérisable tel que les $\alpha$-oléfines (propène, butène-1, hexène-1, méthyl-4-pentène-1, octène-1 etc...) de fabriquer des copolymères d'éthylène.

Le procédé selon l'invention a une influence remarquable sur les propriétés macromoléculaires des polymères fabriqués. On observe en premier lieu qu'il permet d'élargir de manière significative leur répartition des masses moléculaires en augmentant le rapport

$$\frac{Mw}{Mn}$$

de la masse moléculaire moyenne en poids à la masse moléculaire moyenne en nombre. En second lieu il permet, à production égale de polymère, de diminuer l'indice de branchement long—tel que défini par CONSTANTIN et MACHON, European Polymer Journal, 14, 703—707 (1978)—des macromolécules en diminuant la température de la dernière zone réactionnelle.

D'autres avantages de la présente invention apparaîtront à la lecture des exemples suivants, donnés à titre illustratif et non limitatif.

Exemples 1 à 6

La polymérisation de l'éthylène est effectuée dans un réacteur autoclave cylindrique comprenant trois zones d'un volume de 1 litre chacune et équipé d'un agitateur à palettes. Les zones sont séparées par des écrans à soupape. L'éthylène comprimé alimente la première zone, dans laquelle on injecte également de l'eau selon la proportion pondérale indiquée au Tableau I. Cette première zone n'est pas à proprement parler une zone réactionnelle puisqu'aucun initiateur de radicaux libres n'y est injecté; elle permet de réaliser la dissolution de l'eau dans l'éthylène. Dans la seconde zone on injecte une solution d'un initiateur de radicaux libres dans un hydrocarbure. Cet initiateur est respectivement:

— le perbenzoate de tertiobutyle pour les exemples 1 à 3.
— le peroxyde de ditertiobutyle pour les exemples 4 à 6.

La troisième zone est une zone réactionnelle dont la température est un peu supérieure à celle de la seconde zone. Dans la série des exemples 1 à 3, la pression de polymérisation est de 1400 bars et les températures des trois zones sont respectivement $T_1$=129°C, $T_2$=230°C et $T_3$=242°C. Dans la série des exemples 4 à 6, la pression de polymérisation est de 1500 bars et les températures des trois zones sont respectivement $T_1$=139°C, $T_2$=250°C, et $T_3$=258°C.

Le tableau I ci-après rassemble les résultats de polymérisation, notamment de conversion de l'éthylène en polyéthylène exprimé en pourcentage, ainsi que les propriétés suivantes du polymère: indice de fluidité I.F. mesuré en dg/min selon la norme ASTM 1238—62 T et indice de polydispersité mesuré par le rapport

$$\frac{Mw}{Mn}$$

de la masse moléculaire moyenne en poids à la masse moléculaire moyenne en nombre, chacune d'elles étant déterminée par chromatographie de perméation de gel. Il faut comprendre que les exemples 1 et 4, réalisés sans injection d'eau, sont donnés à titre comparatif.

**Exemple 7**

La polymérisation de l'éthylène est effectuée dans le même appareillage qu'aux exemples 1 à 6, la pression étant de 2 300 bars et la température dans les zones réactionnelles de 280°C. L'eau injectée dans la première zone représente 13% en poids de l'éthylène alimentant cette même zone. L'initiateur de radicaux libres utilisé est le peroxyde de ditertiobutyle.

Au cours de cet essai de polymérisation on obtient, avec un taux de conversion de 37% de l'éthylène en polyéthylène, un polymère d'indice de fluidité égal à 0,9 dg/min, de masse volumique 0,922 g/cm3 et d'indice de polydispersité $Mw/Mn$ égal à 17.

TABLEAU I

| Exemple | 1 | 2 | 3 | 4 | 5 | 6 |
|---|---|---|---|---|---|---|
| $\dfrac{H_2O}{C_2H_4}$ % | 0 | 5,0 | 9,5 | 0 | 12,5 | 15,8 |
| Conversion % | 15,0 | 17 | 20 | 16,9 | 22,6 | 25,0 |
| I.F. | 0,2 | 0,1 | 0,3 | 2,6 | 1,7 | 4,2 |
| $\dfrac{Mw}{Mn}$ | 8,5 | 9,7 | 11,1 | 8,6 | 12,9 | 14,0 |

**Exemples 8 à 11**

La polymérisation de l'éthylène est effectuée dans le même appareillage qu'aux exemples 1 à 6, mais la disposition des injections d'eau et d'initiateur est différente. Seul l'éthylène comprimé alimente la première zone, qui n'est donc pas une zone réactionnelle. Dans la seconde zone est injectée de l'eau selon la proportion pondérale indiquée au tableau II. Enfin dans la troisième zone est injecté l'initiateur de radicaux libres, à savoir le peroxyde de ditertiobutyle en solution dans un hydrocarbure pour les exemples 8 (comparatif) et 10, et l'eau oxygénée $H_2O_2$ pour les exemples 9 et 11.

Pour les exemples 8 à 10, la pression de polymérisation est de 1500 bars et les températures des trois zones sont respectivement $T_1=142°C$, $T_2=185°C$ et $T_3=250°C$. Pour l'exemple 11, la pression de polymérisation est de 1400 bars et les températures des trois zones sont respectivement $T_1=166°C$, $T_2=200°C$ et $T_3=230°C$.

Enfin pour l'exemple 9 on a introduit dans la seconde zone du réacteur, avec l'eau de dilution, du chlorure ferreux $FeCl_2$ en proportion 0,02 molaire par rapport à l'eau oxygénée introduite dans la troisième zone.

Le tableau II ci-après rassemble les résultats de polymérisation, mesurés et exprimés de la même façon qu'aux exemples précédents.

TABLEAU II

| Exemple | 8 | 9 | 10 | 11 |
|---|---|---|---|---|
| $\dfrac{\%H_2O}{C_2H_4}$ | 0 | 12 | 12 | 10 |
| Conversion % | 15,3 | 22,1 | 19,7 | 18,7 |
| I.F. | 0,65 | 0,20 | 0,65 | 1,4 |
| $\dfrac{Mw}{Mn}$ | 8,3 | 11,2 | 13,1 | 11,5 |

**Revendications**

1. Procédé de polymérisation de l'éthylène en présence d'au moins un initiateur de radicaux libres, sous une pression comprise entre 1000 et 3000 bars et à une température comprise entre 180° et 300°C, dans au moins un réacteur comportant au moins une zone réactionnelle, caractérisé en ce que la polymérisation est effectuée en présence d'eau à une concentration supérieure ou égale à 1% en poids et inférieure ou égale à la concentration saturante d'eau dans l'éthylène à la température de la zone réactionnelle considérée.

2. Procédé selon la revendication 1, caractérisé en ce que le réacteur comporte au moins une zone non réactionnelle dans laquelle on réalise le dissolution de l'eau de l'éthylène.

3. Procédé selon la revendication 2, caractérisé en ce que ladite zone non réactionnelle est située en amont de la zone réactionnelle.

4. Procédé selon l'une des revendications 1 à 3, caractérisé en ce que la réaction de polymérisation est effectuée en présence d'un agent de transfert de chaîne utilisé en proportion de 0,1 à 2% en volume.

5. Procédé selon l'une des revendications 1 à 4, caractérisé en ce que la réaction de polymérisation est effectuée en présence d'un diluant hydrocarbure saturé employé à une concentration non supérieure à 4% en poids.

6. Procédé selon l'une des revendications 1 à 5, caractérisé en ce que l'initiateur de radicaux libres est choisi parmi l'oxygène, les peroxydes et les peresters.

7. Procédé selon l'une des revendications 1 à 5, caractérisé en ce que l'initiateur de radicaux libres est un composé soluble dans l'eau.

8. Procédé selon la revendication 7, caractérisé en ce que l'initiateur de radicaux libres est choisi parmi l'eau oxygénée, le persulfate d'ammonium et les hydroperoxydes.

9. Procédé selon la revendication 8, caractérisé en ce que l'initiateur de radicaux libres est un hydroperoxyde d'alkylarylsulonate alcalin ou alcalino-terreux.

10. Procédé selon la revendication 9, caractérisé en ce que l'initiateur de radicaux libres est l'hydroperoxyde cumène-sulfonate de sodium employé en solution aqueuse de pH compris entre 3 et 13,5.

11. Procédé selon l'une des revendications 1 à 10, caractérisé en ce que la réaction de polymérisation est effectuée en présence d'un monomère copolymérisable choisi parmi les α-oléfines.

12. Procédé selon l'une des revendications 1 à 11, comprenant une étape de recyclage de l'éthylène non converti vers le réacteur, caractérisé en ce que l'éthylène non converti subit un séchage durant ladite étape de recyclage.

**Patentansprüche**

1. Verfahren zur Polymerisation von Äthylen in Gegenwart mindestens eines Initiators in Form freier Radikale, unter einem Druck zwischen 1000 und 3000 bar und bei einer Temperatur zwischen 180° und 300°C, in mindestens einem Reaktor mit mindestens einer Reaktionszone, dadurch gekennzeichnet, daß die Polymerisation in Gegenwart von Wasser in einer Konzentration, die Höher als oder gleich 1 Gew.-% ist und geringer als die oder gleich der Sättigungskonzentration von Wasser in Äthylen bei der Temperatur der betreffenden Reaktionszone ist, durchgeführt wird.

2. Verfahren nach Anspruch 1, dadurch gekennzeichnet, daß der Reaktor mindestens eine Nichtreaktionszone enthält, in der die Dissolution des Wassers von Äthylen erfolgt.

3. Verfahren nach Anspruch 2, dadurch gekennzeichnet, daß die genannte Nichtreaktionszone stromauf der Reaktionszone liegt.

4. Verfahren nach einem der Ansprüche 1 bis 3, dadurch gekennzeichnet, daß die Polymerisationsreaktion in Gegenwart eines in einem Verhältnis von 0,1 bis 2 Vol.-% verwendeten Kettenübertragungsmittels erfolgt.

5. Verfahren nach einem der Ansprüche 1 bis 4, dadurch gekennzeichnet, daß die Polymerisationsreaktion in Gegenwart eines in einer 4 Gew.-% nicht übersteigenden Konzentration verwendeten gesättigten Kohlenwasserstoff-Streckmittels erfolgt.

6. Verfahren nach einem der Ansprüche 1 bis 5, dadurch gekennzeichnet, daß der Initiator in Form freier Radikale ausgewählt ist aus der Gruppe bestehend aus Sauerstoff, den Peroxiden und den Perestern.

7. Verfahren nach einem der Ansprüche 1 bis 5, dadurch gekennzeichnet, daß der Initiator in Form freier Radikale eine in Wasser lösliche Verbindung ist.

8. Verfahren nach Anspruch 7, dadurch gekennzeichnet, daß der Initiator in Form freier Radikale ausgewählt ist aus der Gruppe bestehend aus Perhydrol, Ammoniumpersulfat und den Hydroperoxiden.

9. Verfahren nach Anspruch 8, dadurch gekennzeichnet, daß der Initiator in Form freier Radikale ein Hydroperoxid eines Alkali- oder Erdalkali-Alkylarylsulfonats ist.

10. Verfahren nach Anspruch 9, dadurch gekennzeichnet, daß der Initiator in Form freier Radikale Cumol-Natriumsulfonat-Hydroperoxid ist, das in wässriger Lösung mit einem pH-Wert zwischen 3 und 13,5 verwendet wird.

11. Verfahren nach einem der Ansprüche 1 bis 10, dadurch gekennzeichnet, daß die Polymerisationsreaktion in Gegenwart eines aus den α-Olefinen ausgewählten copolymerisierbaren Monomers erfolgt.

12. Verfahren nach einem der Ansprüche 1 bis 11, enthaltend einen Schritt zur Rückführung nicht umgewandelten Äthylens zu dem Reaktor, dadurch gekennzeichnet, daß das nicht umgewandelte Äthylen während des genannten Rückführungsschrittes einer Trocknung unterworfen wird.

**Claims**

1. A process for polymerizing ethylene in the presence of at least one free radical initiator, in at least one reactor having at least one reaction zone, at a pressure between 1000 and 3000 bar and at a temperature between 180° and 300°C., characterized in that said polymerization is effected in the presence of water at a concentration higher than or equal to 1% by weight and lower than or equal to the saturation concentration of water in ethylene at the temperature of said reaction zone.

2. A process according to claim 1, characterized in that said reactor comprises at least one non-reaction zone wherein said water is dissolved in said ethylene.

3. A process according to claim 2, characterized in that said non-reaction zone is located upstream of said reaction zone.

4. A process according to any of claims 1 to 3, characterized in that said polymerization is further effected in the presence of from 0.1 to 2% by volume of a chain transfer agent.

5. A process according to any of claims 1 to 4, characterized in that said polymerization is effected in the presence of at most 4% by weight of a saturated hydrocarbon-type diluent.

6. A process according to any of claims 1 to 5 characterized in that said free radical initiator is selected from oxygen peroxides and peresters.

7. A process according to any of claims 1 to 5, characterized in that initiator is a water-soluble compound.

8. A process according to claim 7, characterized in that said water-soluble compound is selected from the group consisting of hydrogen peroxide, ammonium persulphate and hydroperoxides.

9. A process according to claim 8, characterized in that said water-soluble compound is a hydroperoxide of an alkyl-arylsulphonate of an alkali or alkaline earth metal.

10. A process according to claim 9, characterized in that said water-soluble compound is sodium cumene sulphonate hydroperoxide in an aqueous solution having a pH between 3 and 13.5.

11. A process according to any of claims 1 to 10, characterized in that said polymerization is effected in the presence of a copolymerizable monomer selected from $\alpha$-olefins.

12. A process according to any of claims 1 to 11, comprising a step for recycling the non-converted ethylene to the reactor, characterized in that the non-converted ethylene undergoes a drying step during said recycling step.